# EUROPEAN PATENT APPLICATION

(11) **EP 4 672 075 A1**
(43) Date of publication of application: **31.12.2025**
(21) Application number: 25184831.3
(22) Date of filing: 24.06.2025
(51) Int. Cl.: G06F 30/15, G06F 30/23, G06F 113/06, G06F 113/26

(54) **METHOD AND APPARATUS FOR FORMING A COMPOSITE STRUCTURAL ELEMENT**

(30) Priority: 27.06.2024 US 202418755853
(71) Applicant: The Boeing Company, Arlington, VA 22202 (US)
(72) Inventor: JUSTUSSON, Brian, Arlington, VA, 22202 (US); BOETTCHER, Philipp Andreas, Arlington, VA, 22202 (US)
(74) Representative: Hoffmann Eitle

(57) **Abstract**

A method and system for designing a structural element for an aircraft includes defining a structural element, the structural element including a composite structure and a candidate interwoven wire fabric, wherein the candidate interwoven wire fabric forms a conductive pathway in the structural element. This may include generating a computer model of the composite structure; generating a computer model of the candidate interwoven wire fabric; forming a virtual prototype of the structural element including the composite structure and candidate interwoven wire fabric integrated therein; simulating, via a finite element model, a direct current injection event into the virtual prototype; determining an expected conductive pathway; identifying a risk associated with the expected conductive pathway in the virtual prototype; and implementing, as the structural element, the composite structure and the candidate interwoven wire fabric when the risk is less than a threshold risk.

## Description

### INTRODUCTION

Structural elements of aircraft and other devices, e.g., wind turbines, may be fabricated employing composite materials, which are lightweight materials that are lighter in weight and have better mechanical and fatigue properties as compared to mechanically equivalent metallic structures. Composite materials, such as glass fibers, carbon fibers, aramid fibers or boron fibers, are combined with a coupling agent such as an epoxy resin/hardener, ceramic material or a metal matrix. Aircraft having composite structures and/or elements have been shown to have superior mechanical and structural performance over metallic structures due to an improved strength-to-weight ratio. Adoption of composite structures may reduce weight and thus decrease fuel consumption.

Aircraft, including composite structures and/or elements thereof, are exposed to various electromagnetic effects (EME), including, but not limited to lightning strikes and high intensity radiated fields (HIRF). Composite materials are less electrically conductive and provide less electromagnetic shielding than aluminum. Reduced conductivity causes reduced current dissipation which may affect structural integrity when an electromagnetic effect (EME), such as a lightning strike, occurs. Specifically, when lightning strikes an aircraft, a conductive path on the skin of the aircraft allows electricity to travel along the skin and exit at some other location on the aircraft. During a lightning strike, electrical current may traverse all available paths to complete a lightning circuit, including but not limited to cloud-to-ground path, a cloud-to-cloud path, and a ground-to-cloud path. Without an adequate conductive path, arcing and hot spots may occur, possibly affecting the aircraft skin. Also, the lower electrical shielding capability of composite materials may increase the lightning threat to wiring and systems within the aircraft.

### SUMMARY

There is a need to channel current occurring as the result of an EME event, e.g., a lightning strike, away from a composite structure to minimize the potential for compromising structural integrity of the composite structure.

The concepts described herein provide a system, apparatus, and/or method related to usage of composite elements of aircraft, e.g., wings, fuselages, flight control surfaces, flaps, elevators, ailerons, rudders, engine cowlings, or part thereof, wherein the composite elements are fabricated from composite materials having interwoven wire fabric to minimize electromagnetic effects in-use.

An aspect of the disclosure may include a method for designing a structural element for an aircraft, which includes defining a structural element, the structural element including a composite structure and a candidate interwoven wire fabric, wherein the candidate interwoven wire fabric is arranged to form an optimal conductive pathway in the structural element; generating a computer model of the composite structure; generating a computer model of the candidate interwoven wire fabric architecture; forming a virtual prototype of the structural element, wherein the virtual prototype of the element includes the computer model of the composite structure with the computer model of the candidate interwoven wire fabric integrated therein; simulating, via a finite element model, a direct current injection event into the virtual prototype; determining an expected conductive pathway in the virtual prototype based upon the simulating of the direct current injection event into the virtual prototype; identifying a risk associated with the expected conductive pathway in the virtual prototype; and implementing, as the structural element, the composite structure and the candidate interwoven wire fabric when the risk associated with the expected conductive pathway in the virtual prototype is less than a threshold risk.

Another aspect of the disclosure may include fabricating the structural element including the composite structure and the candidate conductive element, wherein the candidate conductive element is fabricated as a laminate that is disposed overtop a portion of the composite structure.

Another aspect of the disclosure may include defining the candidate conductive element as an interwoven wire fabric (IWWF) that is arranged as a laminate that is disposed overtop a portion of the composite structure.

Another aspect of the disclosure may include defining the candidate conductive element as an interwoven wire fabric (IWWF) having a topology.

Another aspect of the disclosure may include defining the topology of the IWWF by defining one or more of a wire material, wire gage, wire density, weave, or orientation of the IWWF.

Another aspect of the disclosure may include defining the candidate conductive element, wherein the candidate conductive element is arranged to form the conductive pathway in the structural element by defining the candidate conductive element to be coextensive with a surface of the composite structure.

Another aspect of the disclosure may include identifying the risk associated with the expected conductive pathway in the virtual prototype by identifying a risk to structural integrity of the structural element that is associated with the expected conductive pathway in the virtual prototype.

Another aspect of the disclosure may include identifying a risk of an ignition event in the structural element that is associated with the expected conductive pathway in the virtual prototype.

Another aspect of the disclosure may include a system for designing a structural element for an aircraft, wherein the system includes a controller, the controller having algorithmic code stored in a non-volatile memory thereof. The algorithmic code is executable to: define a composite structure for a structural element; define a candidate conductive element, wherein the candidate conductive element is arranged to form a conductive pathway in the structural element; generate a first computer model of the composite structure; generate a second computer model of the candidate conductive element; form a virtual prototype of the structural element, wherein the virtual prototype of the structural element includes the first computer model of the composite structure with the second computer model of the candidate conductive element integrated therein; simulate, via a finite element model, a direct current injection event into the virtual prototype of the structural element; determine an expected conductive pathway in the virtual prototype based upon the simulating of the direct current injection event into the virtual prototype; identify a risk associated with the expected conductive pathway in the virtual prototype; and implement the composite structure and the candidate conductive element as the structural element when the risk associated with the expected conductive pathway in the virtual prototype is less than a threshold risk.

Another aspect of the disclosure may include an aircraft having a structural element in the form of a composite structure and a conductive element; wherein the conductive element is arranged to form a conductive pathway in the structural element. The conductive element is designed by: generating a first computer model of the composite structure; generating a second computer model of a candidate conductive element; forming a virtual prototype of the structural element, wherein the virtual prototype of the structural element includes the first computer model of the composite structure with the second computer model of the candidate conductive element integrated therein; simulating, via a finite element model , a direct current injection event into the virtual prototype of the structural element; determining an expected conductive pathway in the virtual prototype based upon the simulating of the direct current injection event into the virtual prototype; identifying a risk associated with the expected conductive pathway in the virtual prototype; and selecting the candidate conductive element as the conductive element when the risk associated with the expected conductive pathway in the virtual prototype is less than a threshold risk.

The above summary is not intended to represent every possible embodiment or every aspect of the present disclosure. Rather, the foregoing summary is intended to exemplify some of the novel aspects and features disclosed herein. The above features and advantages, and other features and advantages of the present disclosure, will be readily apparent from the following detailed description of representative embodiments and modes for carrying out the present disclosure when taken in connection with the accompanying drawings and the claims.

### BRIEF DESCRIPTION OF THE DRAWINGS

One or more embodiments will now be described, by way of example, with reference to the accompanying drawings, in which:
FIG. 1 schematically illustrates an aircraft that includes a structural element having a composite structure, in accordance with the disclosure.
FIG. 2 schematically illustrates a cutaway side view of a portion of an embodiment of structural element having a composite structure, in accordance with the disclosure.
FIG. 3 schematically illustrates a flowchart of a process, in accordance with the disclosure.
FIG. 4 pictorially depicts a portion of a ply of a composite structure of a structural element having interwoven fiber, in accordance with the disclosure.
FIG. 5 pictorially depicts a portion of a ply of a composite structure of a structural element having interwoven fiber and a first candidate design for an interwoven wire fabric (IWWF) embedded therein, in accordance with the disclosure.
FIG. 6 pictorially depicts a portion of a ply of a composite structure of a structural element having interwoven fiber and a second candidate design for interwoven wire fabric (IWWF) embedded therein, in accordance with the disclosure.

The appended drawings are not necessarily to scale, and may present a somewhat simplified representation of various features of the present disclosure as disclosed herein, including, for example, specific dimensions, orientations, locations, and shapes. Details associated with such features will be determined in part by the particular intended application and use environment.

### DETAILED DESCRIPTION

The components of the disclosed embodiments, as described and illustrated herein, may be arranged and designed in a variety of different configurations. Thus, the following detailed description is not intended to limit the scope of the disclosure, as claimed, but is merely representative of possible embodiments thereof. In addition, while numerous specific details are set forth in the following description in order to provide a thorough understanding of the embodiments disclosed herein, some embodiments can be practiced without some of these details. Moreover, for the purpose of clarity, certain technical material that is understood in the related art has not been described in detail to avoid obscuring the disclosure. For purposes of convenience and clarity, directional terms such as top, bottom, left, right, up, over, above, below, beneath, rear, and front, may be used with respect to the drawings. These and similar directional terms are not to be construed to limit the scope of the disclosure.

As used herein, the term "system" may refer to one of or a combination of mechanical and electrical actuators, sensors, controllers, application-specific integrated circuits (ASIC), combinatorial logic circuits, software, firmware, and/or other components that are arranged to provide the described functionality.

Embodiments may be described herein in terms of functional and/or logical block components and various processing steps. Such block components may be realized by a combination or collection of mechanical and electrical hardware, software, and/or firmware components configured to perform the specified functions. For example, an embodiment may employ various combinations of mechanical components and electrical components, integrated circuit components, memory elements, digital signal processing elements, logic elements, look-up tables, or the like, which may carry out a variety of functions under the control of one or more microprocessors or other control devices. In addition, those skilled in the art will appreciate that the illustrated embodiments may be practiced in conjunction with mechanical and/or electronic systems, and that the vehicle systems described herein are merely illustrative embodiments of possible implementations.

For the sake of brevity, some known components and techniques and other functional aspects of the systems (and the individual operating components of the systems) may not be described in detail herein. Furthermore, the connecting lines shown in the various figures contained herein are intended to represent example functional relationships and/or physical couplings between the various elements. Many alternative or additional functional relationships or physical connections may be present in an embodiment of the disclosure.

Furthermore, the first definition of an acronym or other abbreviation applies to subsequent uses herein of the same abbreviation and applies mutatis mutandis to normal grammatical variations of the initially defined abbreviation; and, unless expressly stated to the contrary, measurement of a property is determined by the same technique as previously or later referenced for the same property.

It is also to be understood that this disclosure is not limited to the specific embodiments and methods described below, as specific components and/or conditions may, of course, vary. Furthermore, the terminology used herein is used for the purpose of describing particular embodiments of the present disclosure and is not intended to be limiting.

Also, as used in the specification and the appended claims, the singular form "a," "an," and "the" include plural referents unless the context clearly indicates otherwise. For example, reference to a component in the singular is intended to include a plurality of components.

The use of ordinals such as first, second and third does not necessarily imply a ranked sense of order, but rather may distinguish between multiple instances of an act or structure.

Numerical values of parameters (e.g., of quantities or conditions) in this specification, including the appended claims, are to be understood as being modified by the term "about" whether or not "about" actually appears before the numerical value. "About" indicates that the stated numerical value allows some slight imprecision (with some approach to exactness in the value; about or reasonably close to the value; nearly). If the imprecision provided by "about" is not otherwise understood in the art with this ordinary meaning, then "about" as used herein indicates at least variations that may arise from ordinary methods of measuring and using such parameters. In addition, disclosure of ranges includes disclosure of all values and further divided ranges within the entire range. Each value within a range and the endpoints of a range are hereby all disclosed as separate embodiments.

As employed herein, terms such as "vertical", "horizontal", "left", "right", "upper", "lower", and similar expressions are non-limiting terms that merely describe the various elements as illustrated in the Figures, and are not intended to limit the scope of the disclosure.

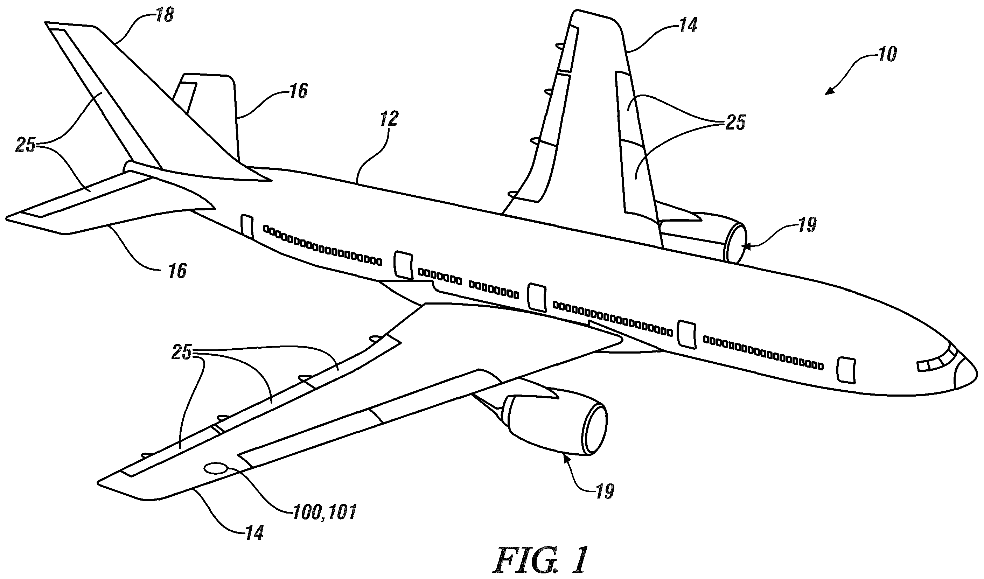

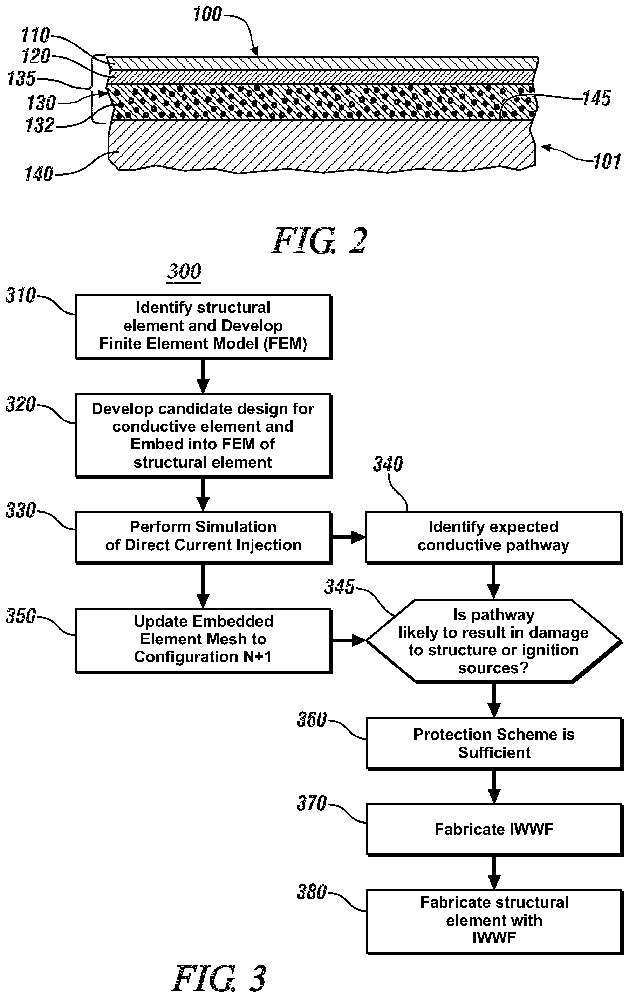

FIGS. 1 and 2 schematically illustrate elements of a fixed wing aircraft 10 having one or multiple structural elements 100 with a composite structure 101 that includes a skin portion 102 that is fabricated to incorporate a conductive layer 135, wherein the conductive layer 135 incorporates an embedded conductive element 130 including an interwoven wire fabric (IWWF) layer 132 with features that channel or otherwise mitigate electromagnetic effects (EME), including, but not limited to lightning strikes. FIG. 2 illustrates a partial cutaway view of an embodiment of the skin portion 102 of the structural element 100 that is fabricated incorporating the conductive layer 135. Referring again to FIG. 1, the aircraft 10 includes a fuselage 12, one or more wings 14, a horizontal stabilizer 16, and a vertical stabilizer 18. The aircraft 10 also includes one or more turbine engines 19. Each of the one or more wings 14, horizontal stabilizer 16, and vertical stabilizer 18 includes a moveable surface 25 that is arranged on an outside skin of the aircraft 10. The moveable surfaces 25 include, e.g., flaps, ailerons, elevators, stabilizers, etc. Any one of, a combination of, or all of the aforementioned elements of the aircraft 10 may be a structural element 100 that is fabricated as a composite structure 101 that includes an embodiment of the conductive layer 135. The structural element 100 may be a flight control surface, a flap, an elevator, an aileron or a rudder, or part thereof, a radome or part thereof, or an engine cowling or part thereof, or other element, without limitation. Alternatively, the concepts described herein may be employed on structural elements of a propulsion device on a flying car, a drone, an electric vertical takeoff and landing vehicle (eVTOL), etc. Alternatively, the concepts described herein may be employed on structural elements of a marine system, a land-based vehicle, or other vehicles, without limitation. Alternatively, the concepts described herein may be employed on structural elements of a fixture, e.g., a windmill (not illustrated).

FIG. 2 schematically illustrates a cutaway cross-section of the structural element 100 of FIG. 1, including the conductive layer 135 having the embedded conductive element 130 including IWWF layer 132, wherein the conductive element 130 is fabricated as a laminate that is disposed overtop a portion of the composite structure 101, and are arranged on a surface 145 of substrate 140. The structural element 100 includes the substrate 140 and the conductive layer 135, wherein the conductive layer 135 is formed with the embedded conductive element 130 including the IWWF 132, a surfacer layer 120, and a paint layer 110. The layers above the substrate 140 form the conductive layer 135. Depending on the implementation, the conductive layer 135 may only include the embedded conductive element 130, surfacer layer 120, and paint layer 110. In the alternative, the conductive layer 135 may include other layers in addition to or in place of the ones illustrated in this example.

In one embodiment, the structural element 100 is a composite structure 101 that serves as the skin portion 102 of a fuselage or another element. Such a composite structure may include a laminate made of fiber-reinforced polymer. The IWWF 132 of the embedded conductive element 130 contains a multiplicity of interwoven wires, which provide a conductive path for electromagnetic effects, such as may occur as a result of a lightning strike. Surfacer layer 120 provides a coating or surface for the application of paint layer 110. The surfacer layer 120 and paint layer 110 may form a dielectric component. The dielectric component may include other materials or layers, such as a sealant, a nonconductive primer, or some other combination of those materials along with surfacer layer 120 and paint layer 110. The thickness of the dielectric layer above the embedded conductive element 130 may affect the dissipation of electrical energy from a lightning strike. As the dielectric thickness increases, there may be a greater risk that integrity of a portion of the composite structure may be affected when a lightning strike is encountered.

In one embodiment, the embedded conductive element 130 is fabricated as IWWF 132, as described herein. Alternatively, the embedded conductive element 130 may be fabricated as an expanded copper foil. The IWWF 132 provides a weaved or woven structure having greater homogeneous electrical conductivity compared to the expanded copper foil.

The IWWF 132 has a topology that is defined and designed in terms of a wire material(s), wire gage(s), wire density (e.g., strands per square inch), weave, and orientation, with the orientation defined relative to a longitudinal axis, a lateral axis, a center point, or another reference element of the structural element 100. As appreciated, the topology defines and describes properties of the IWWF 132 that are preserved under continuous deformations, such as stretching, twisting, crumpling, and bending, that occur when the IWWF 132 is conformed to a surface of the composite structure 101 in forming the structural element 100.

The IWWF 132 of the embedded conductive element 130 is composed as a woven fabric that is fabricated from conductive wire, wherein the conductive wire may be aluminum, an aluminum alloy, copper, a copper alloy, or another electrically conductive substance.

The woven fabric of the IWWF 132 may be in the form of one or more of the following weaves: plain Dutch weave, twill weave, plain weave, twill Dutch weave, lock crimp weave, inter-crimp weave, twill Dutch double weave, stranded weave, etc., without limitation.

The woven fabric of the IWWF 132 may have a longitudinal wire system and a transverse wire system, with the longitudinal wire system being referred to as warp, and the transverse wire system being referred to as weft or fill yarn. Warp and weft are at a 90° angle to each other in one embodiment. Warp and weft wires are interlaced according to certain rules, thus creating the wire composite or fabric.

The type of interlacing of warp and weft or fill yarn is called the weave. The order of interlacing is repeated in the weave after a certain number of warp and weft wires. These repetitions are called weave repeat.

Warp wire count, weft wire count and wire count in accordance with the weave is called the setting of the wire fabric. The setting determines the structure of the wire fabric and indicates the number of warp and weft wires in a certain gauge (e.g. per cm or 10 cm or over the fabric width).

Selectable design elements of the IWWF 132 may be described in terms of warp, longitudinal wire gage, weft, transverse wire gage, weave, warp wire count, weft wire count, wire material, diameters of warp and weave elements, aperture sizes, braided wires, wire densities.

Other selectable design elements of the IWWF 132 further include orientation of the IWWF 132 with regard to longitudinal or lateral axes of the skin portion 102 of the respective component, wherein the IWWF 132 provides resistance to lightning strikes. The design space for the IWWF 132 may be limitless. Depending on how current is desired to be flowed through the aircraft, different discrete wires can be woven in different directions or follow almost any fabric topology.

Attempts have been made to mitigate the EME through advanced modeling approaches; however, the modeling approaches are limited to idealizing the ply as a single homogenized response. This effect does not accurately capture the effects of the discrete current pathways that have been engineered into the structure. Additionally, it cannot capture single points of contact that might prevent arcing.

The concepts described and claimed herein provide an analytical structure to define how current flows through discrete pathways in composite structures to enable design and analysis of improved EME solutions.

FIG. 3 illustrates, in flowchart form, a computational analysis process 300 for identifying a design for an embodiment of the structural element 100 having a composite structure 101 that includes a skin portion that is fabricated to incorporate a conductive layer 135, wherein the conductive layer 135 incorporates an embedded conductive element 130 including, in one embodiment, an interwoven wire fabric (IWWF) layer 132.

The computational analysis process 300 includes identifying and incorporating a design of the structural element 100 having composite structure 101, and developing a computational model thereof (Step 310).

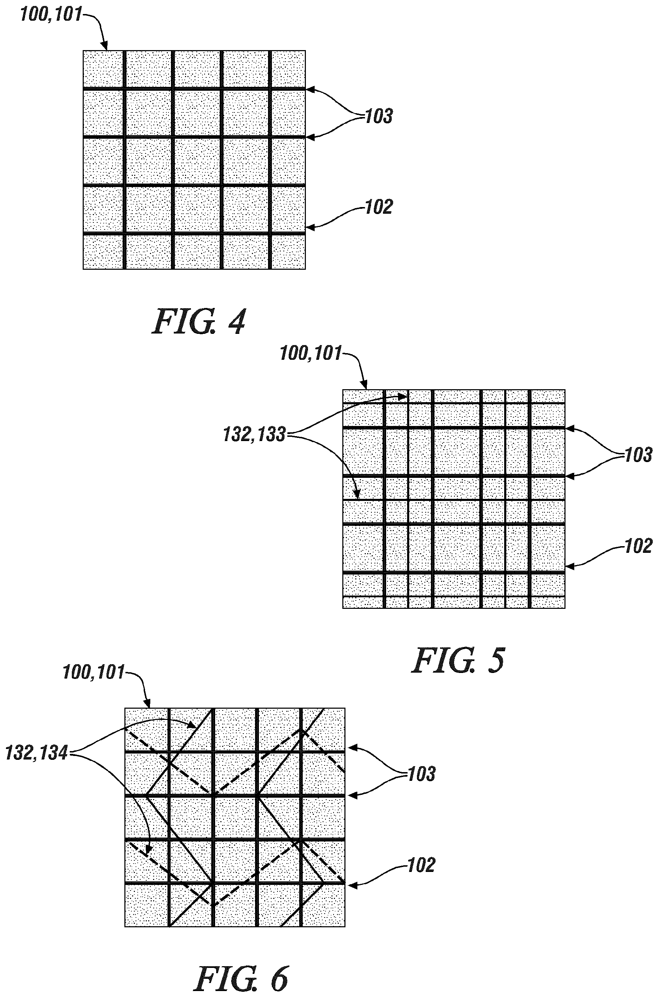

FIG. 4 pictorially depicts a portion of a ply 102 of the composite structure 101 of structural element 100 having interwoven fiber 103.

Referring again to FIG. 3, the computational model of the structural element 100 may be in the form of a finite element model, a finite mesh, a finite difference framework, etc., without limitation. The finite element model development may be created in commercially available software capable of developing a finite element or finite difference framework. The structure may have various levels of fidelity ranging from a global FEM mesh to a detailed element mesh.

At least one or a plurality of candidate designs for the IWWF 132 are developed, with a corresponding computational model. Selectable design elements of the IWWF 132 may be described in terms of warp, longitudinal wire gage, weft, transverse wire gage, weave, warp wire count, weft wire count, wire material, diameters of warp and weave elements, aperture sizes, braided wires, wire densities. Other selectable design elements of the IWWF 132 further include orientation of the IWWF 132 with regard to longitudinal or lateral axes of the skin portion 102 of the respective component.

A candidate design for IWWF 132 is identified, and a computational model of the candidate for IWWF 132 is developed, and is arranged overtop, or embedded, or inserted, or otherwise virtually integrated into the computational model of the composite structure 101 to form a virtual prototype of the structural element 100 (Step 320).

FIG. 5 pictorially depicts a portion of ply 102 of the composite structure 101 of structural element 100 having interwoven fiber 103 and a first candidate design 133 for the IWWF 132 embedded therein.

Referring again to FIG. 3, the virtual prototype of the structural element 100 developed in Step 320 is subjected to simulated injection of direct current, e.g., simulating a lightning strike (Step 330). This includes employing an embedded element approach within the finite element method (FEM) framework. The embedded element approach allows for lower order elements (e.g., rods/trusses, beams, shells) to be inserted into higher order elements (e.g., solids) to model discrete areas of interest. A standard finite element mesh is used with the discrete architecture of the IWWF included. To implement, any finite element mesh can be used with anisotropic conductivity assigned to the directions. Truss elements (or beams) can be inserted in any orientation. In one embodiment, the elements may be arranged orthogonal to one another. Alternatively, the elements may be arbitrarily inserted. When modeling this approach, the current distribution will more heavily be handled by the IWWF embedded elements yielding a more accurate description of how the current flows through the virtual prototype of the structural element 100 of the aircraft. This provides improved accuracy of current flow, and is computationally efficient by using lower order elements. Analytical tools that enable this analysis include a conductivity FEM (Finite Element Model) analysis, which provides an ability to conduct analysis within a standard analytical framework, particularly for current injection such as lightning strikes.

The simulated injection of direct current into the virtual prototype of the structural element 100 results in identifying an expected conductive pathway through the structural element 100 (Step 340). The expected conductive pathway through the structural element 100 is analyzed to identify, locate, determine, detect, and otherwise quantify a risk to the structural integrity of the structural element 100, i.e., is analyzed to determine if, where, and to what extent the expected conductive pathway through the structural element 100 affects the structural integrity of the virtual prototype of the structural element 100 (Step 345). This analysis may be in the form of a risk assessment, e.g., a failure mode analysis (FMA), a failure mode and effects analysis (FMEA), a failure mode, effects, and criticality analysis (FMECA), etc. The quantified risk to the structural integrity of the structural element 100 is compared to a threshold risk to assess whether the expected conductive pathway through the structural element 100 is expected to have a non-positive effect upon the structural integrity of the virtual prototype of the structural element 100.

When the expected conductive pathway through the structural element 100 is expected to have a non-positive effect upon the structural integrity of the virtual prototype of the structural element 100 (Y), the present candidate design for the IWWF 132 is abandoned, and a new candidate design for the IWWF 132 is selected, with a computational model of the new candidate design for IWWF 132 being developed, and embedded, inserted or otherwise virtually integrated into the computational model of the composite structure 101 to form an updated virtual prototype of the structural element 100 (Step 350).

FIG. 6 pictorially depicts a portion of ply 102 of the composite structure 101 of structural element 100 having interwoven fiber 103 and a second candidate design 134 for the IWWF 132 embedded therein.

Referring again to FIG. 3, the updated virtual prototype of the structural element 100 is subjected to simulated injection of direct current (Step 330), and the process steps 340 and 350 are repeated.

When the expected conductive pathway through the structural element 100 does not have a non-positive effect upon the structural integrity of the virtual prototype of the structural element 100 (N), the present candidate design for the IWWF 132 is deemed acceptable (Step 360).

The present candidate design for the IWWF 132 may be fabricated as hardware (Step 370) and installed into an embodiment of the structural element 100 of the aircraft for further testing, development and/or production implementation (Step 380).

In this manner, the composite structure 101 and the candidate conductive element in the form of the present candidate design for the IWWF 132 may be implemented as the structural element 100 for further testing and development when the risk associated with the expected conductive pathway in the virtual prototype is less than a threshold risk.

The concepts described herein may be employed in designing new protection schemes including orientations of IWWF to minimize the effects of a direct lightning strike, such as structural risks on a structural element 100 fabricated using composite material. The concepts may also be used in repairing a structural element.

When scarfing acreage structure, a conductive path is needed, often resulting in a large amount of IWWF to be used to ensure contact between the embedded wires. This analysis technique can be used to better ensure conductivity while minimizing material.

Furthermore, the concepts described herein may be used to help predict, identify and mitigate arcing and sparking events inside of fastener holes within the structural element.

As explained above and reiterated below, the present disclosure includes, without limitation, the following example implementations.

Clause 1: A method for designing a structural element, the method comprising: defining a composite structure for a structural element; defining a candidate conductive element, wherein the candidate conductive element is arranged to form a conductive pathway in the structural element; generating a first computer model of the composite structure; generating a second computer model of the candidate conductive element; forming a virtual prototype of the structural element, wherein the virtual prototype of the structural element includes the first computer model of the composite structure with the second computer model of the candidate conductive element integrated therein; simulating, via a finite element model, a direct current injection event into the virtual prototype of the structural element; determining an expected conductive pathway in the virtual prototype based upon the simulating of the direct current injection event into the virtual prototype; identifying a risk associated with the expected conductive pathway in the virtual prototype; and implementing the composite structure and the candidate conductive element as the structural element when the risk associated with the expected conductive pathway in the virtual prototype is less than a threshold risk.

Clause 2. The method of clause 1, further comprising fabricating the structural element including the composite structure and the candidate conductive element, wherein the candidate conductive element is fabricated as a laminate that is disposed overtop a portion of the composite structure.

Clause 3. The method of any of clauses 1 through 2, wherein defining the candidate conductive element comprises defining the candidate conductive element as an interwoven wire fabric (IWWF) that is arranged as a laminate that is disposed overtop a portion of the composite structure.

Clause 4. The method any of clauses 1 through 3, wherein defining the candidate conductive element as an interwoven wire fabric (IWWF) comprises defining a topology of the IWWF.

Clause 5. The method any of clauses 1 through 4, wherein defining the topology of the IWWF comprises defining one of a wire material, wire gage, wire density, weave, or orientation of the IWWF.

Clause 6. The method of any of clauses 1 through 5, wherein defining the candidate conductive element, wherein the candidate conductive element is arranged to form the conductive pathway in the structural element comprises defining the candidate conductive element to be coextensive with a surface of the composite structure.

Clause 7. The method of any of clauses 1 through 6, wherein identifying the risk associated with the expected conductive pathway in the virtual prototype comprises identifying a risk to structural integrity of the structural element that is associated with the expected conductive pathway in the virtual prototype.

Clause 8. The method of any of clauses 1 through 7, wherein identifying the risk associated with the expected conductive pathway in the virtual prototype comprises identifying a risk of an ignition event in the structural element that is associated with the expected conductive pathway in the virtual prototype.

Clause 9. A system for designing a structural element for an aircraft, the system comprising: a controller, the controller including algorithmic code stored in a non-volatile memory thereof, the algorithmic code being executable to: define a composite structure for a structural element; define a candidate conductive element, wherein the candidate conductive element is arranged to form a conductive pathway in the structural element; generate a first computer model of the composite structure; generate a second computer model of the candidate conductive element; form a virtual prototype of the structural element, wherein the virtual prototype of the structural element includes the first computer model of the composite structure with the second computer model of the candidate conductive element integrated therein; simulate, via a finite element model , a direct current injection event into the virtual prototype of the structural element; determine an expected conductive pathway in the virtual prototype based upon the simulating of the direct current injection event into the virtual prototype; identify a risk associated with the expected conductive pathway in the virtual prototype; and implement the composite structure and the candidate conductive element as the structural element when the risk associated with the expected conductive pathway in the virtual prototype is less than a threshold risk.

Clause 10. The system of clause 9, wherein the algorithmic code being executable to define the candidate conductive element comprises the algorithmic code being executable to define the candidate conductive element as an interwoven wire fabric (IWWF) that is arranged as a laminate that is disposed overtop a portion of the composite structure.

Clause 11. The system of any of clauses 9 through 10, wherein the algorithmic code being executable to define the candidate conductive element as an interwoven wire fabric (IWWF) comprises the algorithmic code being executable to define a topology of the IWWF with one of a defined wire material, wire gage, wire density, weave, or orientation.

Clause 12. The system of any of clauses 9 through 11, wherein the algorithmic code being executable to define the topology of the IWWF comprises the algorithmic code being executable to define one of a wire material, wire gage, wire density, weave, or orientation of the IWWF.

Clause 13. The system of any of clauses 9 through 12, wherein the algorithmic code being executable to define the candidate conductive element, wherein the candidate conductive element is arranged to form the conductive pathway in the structural element comprises the algorithmic code being executable to define the candidate conductive element to be coextensive with a surface of the composite structure.

Clause 14. The system of any of clauses 9 through 13, wherein the algorithmic code being executable to identify the risk associated with the expected conductive pathway in the virtual prototype comprises the algorithmic code being executable to identify a risk to structural integrity of the structural element that is associated with the expected conductive pathway in the virtual prototype.

Clause 15. The system of any of clauses 9 through 14, wherein the algorithmic code being executable to identify the risk associated with the expected conductive pathway in the virtual prototype comprises the algorithmic code being executable to identify a risk of an ignition event in the structural element that is associated with the expected conductive pathway in the virtual prototype.

Clause 16. An aircraft, comprising: a structural element including a composite structure and a conductive element; wherein the conductive element is arranged to form a conductive pathway in the structural element; wherein the conductive element is designed by: generating a first computer model of the composite structure; generating a second computer model of a candidate conductive element; forming a virtual prototype of the structural element, wherein the virtual prototype of the structural element includes the first computer model of the composite structure with the second computer model of the candidate conductive element integrated therein; simulating, via a finite element model , a direct current injection event into the virtual prototype of the structural element; determining an expected conductive pathway in the virtual prototype based upon the simulating of the direct current injection event into the virtual prototype; identifying a risk associated with the expected conductive pathway in the virtual prototype; and selecting the candidate conductive element as the conductive element when the risk associated with the expected conductive pathway in the virtual prototype is less than a threshold risk.

Clause 17. The aircraft of clause 16, wherein the structural element comprises one of a wing, a fuselage, a horizontal stabilizer, a vertical stabilizer, or a flap.

Clause 18. The aircraft of any of clauses 16 through 17, wherein the conductive element is fabricated as a laminate that is disposed overtop a portion of the composite structure.

Clause 19. The aircraft of any of clauses 16 through 18, further comprising the conductive element being an interwoven wire fabric (IWWF) that is arranged as a laminate that is disposed overtop a portion of the composite structure.

Clause 20. The aircraft of any of clauses 16 through 19, further comprising the interwoven wire fabric (IWWF) having a topology including one of a defined wire material, a wire gage, a wire density, a weave, or an orientation.

The detailed description and the drawings or figures are supportive and descriptive of the present teachings. The scope of the present teachings is defined by the claims. While some of the best modes and other embodiments for carrying out the present teachings have been described in detail, various alternative designs and embodiments exist for practicing the present teachings defined in the claims.

## Claims

1. A method for designing a structural element (100), the method comprising:
defining a composite structure (101) for a structural element (100);
defining a candidate conductive element (130), wherein the candidate conductive element (130) is arranged to form a conductive pathway in the structural element (100);
generating a first computer model of the composite structure (101);
generating a second computer model of the candidate conductive element (130);
forming a virtual prototype of the structural element (100), wherein the virtual prototype of the structural element (100) includes the first computer model of the composite structure (101) with the second computer model of the candidate conductive element (130) integrated therein;
simulating, via a finite element model, a direct current injection event into the virtual prototype of the structural element (100);
determining an expected conductive pathway in the virtual prototype based upon the simulating of the direct current injection event into the virtual prototype;
identifying a risk associated with the expected conductive pathway in the virtual prototype; and
implementing the composite structure (101) and the candidate conductive element (130) as the structural element (100) when the risk associated with the expected conductive pathway in the virtual prototype is less than a threshold risk.

2. The method of claim 1, further comprising fabricating the structural element (100) including the composite structure (101) and the candidate conductive element (130), wherein the candidate conductive element (130) is fabricated as a laminate that is disposed overtop a portion of the composite structure (101).

3. The method of claim 1 or 2, wherein defining the candidate conductive element (130) comprises defining the candidate conductive element (130) as an interwoven wire fabric (IWWF (132)) that is arranged as a laminate that is disposed overtop a portion of the composite structure (101), optionally, wherein defining the candidate conductive element (130) as an interwoven wire fabric (IWWF (132)) comprises defining a topology of the IWWF (132), further optionally, wherein defining the topology of the IWWF (132) comprises defining one of a wire material, wire gage, wire density, weave, or orientation of the IWWF (132).

4. The method of any one of claims 1-3, wherein defining the candidate conductive element (130), wherein the candidate conductive element (130) is arranged to form the conductive pathway in the structural element (100) comprises defining the candidate conductive element (130) to be coextensive with a surface (145) of the composite structure (101).

5. The method of any one of claims 1-4, wherein identifying the risk associated with the expected conductive pathway in the virtual prototype comprises
- identifying a risk to structural integrity of the structural element (100) that is associated with the expected conductive pathway in the virtual prototype, and/or
- identifying a risk of an ignition event in the structural element (100) that is associated with the expected conductive pathway in the virtual prototype.

6. A system for designing a structural element (100) for an aircraft (10), the system comprising:
a controller, the controller including algorithmic code stored in a non-volatile memory thereof, the algorithmic code being executable to:
define a composite structure (101) for a structural element (100);
define a candidate conductive element (130), wherein the candidate conductive element (130) is arranged to form a conductive pathway in the structural element (100);
generate a first computer model of the composite structure (101);
generate a second computer model of the candidate conductive element (130);
form a virtual prototype of the structural element (100), wherein the virtual prototype of the structural element (100) includes the first computer model of the composite structure (101) with the second computer model of the candidate conductive element (130) integrated therein;
simulate, via a finite element model , a direct current injection event into the virtual prototype of the structural element (100);
determine an expected conductive pathway in the virtual prototype based upon the simulating of the direct current injection event into the virtual prototype;
identify a risk associated with the expected conductive pathway in the virtual prototype; and
implement the composite structure (101) and the candidate conductive element (130) as the structural element (100) when the risk associated with the expected conductive pathway in the virtual prototype is less than a threshold risk.

7. The system of claim 6, wherein the algorithmic code being executable to define the candidate conductive element (130) comprises the algorithmic code being executable to define the candidate conductive element (130) as an interwoven wire fabric (IWWF (132)) that is arranged as a laminate that is disposed overtop a portion of the composite structure (101).

8. The system of claim 7, wherein the algorithmic code being executable to define the candidate conductive element (130) as an interwoven wire fabric (IWWF (132)) comprises the algorithmic code being executable to define a topology of the IWWF (132) with one of a defined wire material, wire gage, wire density, weave, or orientation.

9. The system of claim 8, wherein the algorithmic code being executable to define the topology of the IWWF (132) comprises the algorithmic code being executable to define one of a wire material, wire gage, wire density, weave, or orientation of the IWWF (132).

10. The system of any one of claims 6-9, wherein the algorithmic code being executable to define the candidate conductive element (130), wherein the candidate conductive element (130) is arranged to form the conductive pathway in the structural element (100) comprises the algorithmic code being executable to define the candidate conductive element (130) to be coextensive with a surface (145) of the composite structure (101).

11. The system of any one of claims 6-10, wherein the algorithmic code being executable to identify the risk associated with the expected conductive pathway in the virtual prototype comprises the algorithmic code being executable to identify
- a risk to structural integrity of the structural element (100) that is associated with the expected conductive pathway in the virtual prototype, and/or
- a risk of an ignition event in the structural element (100) that is associated with the expected conductive pathway in the virtual prototype.

12. An aircraft (10), comprising:
a structural element (100) including a composite structure (101) and a conductive element (130);
wherein the conductive element (130) is arranged to form a conductive pathway in the structural element (100);
wherein the conductive element (130) is designed by:
generating a first computer model of the composite structure (101);
generating a second computer model of a candidate conductive element (130);
forming a virtual prototype of the structural element (100), wherein the virtual prototype of the structural element (100) includes the first computer model of the composite structure (101) with the second computer model of the candidate conductive element (130) integrated therein;
simulating, via a finite element model , a direct current injection event into the virtual prototype of the structural element (100);
determining an expected conductive pathway in the virtual prototype based upon the simulating of the direct current injection event into the virtual prototype;
identifying a risk associated with the expected conductive pathway in the virtual prototype; and
selecting the candidate conductive element (130) as the conductive element (130) when the risk associated with the expected conductive pathway in the virtual prototype is less than a threshold risk.

13. The aircraft (10) of claim 12, wherein the structural element (100) comprises one of a wing, a fuselage (12), a horizontal stabilizer (16), a vertical stabilizer (18), or a flap.

14. The aircraft (10) of claim 12 or 13, wherein the conductive element (130) is fabricated as a laminate that is disposed overtop a portion of the composite structure (101), optionally, wherein the conductive element (130) comprises an interwoven wire fabric (IWWF (132)) that is arranged as a laminate that is disposed overtop a portion of the composite structure (101).

15. The aircraft (10) of claim 12, 13 or 14, wherein a topology of the interwoven wire fabric (IWWF (132)) includes one of a defined wire material, wire gage, wire density, weave, or orientation.
